# EUROPEAN PATENT SPECIFICATION

(11) **EP 2 426 002 B1**
(45) Date of publication and mention of the grant of the patent: **27.03.2013**
(21) Application number: 10195615.9
(22) Date of filing: 17.12.2010
(51) Int. Cl.: B60K 35/00, G01F 23/00, B60W 50/08, B60W 50/14

(54) **A device and a method for warning a user of a vehicle of attaining a minimal value for a residual cruising range**
Vorrichtung und Verfahren zum Hinweisen eines Fahrzeugbenutzers auf einen Erhalt eines Mindestwerts für die Restreichweite
Dispositif et procédé d'avertissement d'un utilisateur de véhicule pour atteindre une valeur minimale d'autonomie résiduelle

(30) Priority: 02.09.2010 DE 102010036201
(43) Date of publication of application: 07.03.2012
(73) Proprietor: Johnson Controls Technology Company, Holland, MI 49423 (US)
(72) Inventor: Andreev, Svilen, 1784 Sofia (BG)
(74) Representative: Liedtke, Markus

(56) References cited:
- EP-A1- 1 707 430
- EP-A1- 2 221 208
- EP-A2- 1 275 936
- WO-A1-2009/109821
- DE-A1- 19 902 949

## Description

### Technical field

The present invention relates to a device and a method for warning a user of a vehicle of attaining a minimal value for a residual cruising range.

### Backaround of the invention

It is well known that the amount of gas left in a vehicle's tank limits the residual cruising range of the vehicle. Devices of the state of the art are capable of displaying the remaining residual cruising range that the vehicle is still able to cover. Furthermore, it is known that an additional warning signal may be displayed when a pre-determined minimal value for the residual cruising range has been reached. The pre-determined minimal value is usually set by the manufacturer of the vehicle.

The DE 10 2005 016 006 A1 discloses a system and a method for providing information about filling stations. The system is capable of determining the current location of the vehicle, the location of a possible destination, the route thereto and local prices for fuel. Furthermore, the residual cruising range of the vehicle is estimated. When the residual cruising range drops below a minimal value, a computer determines all filling stations that are still within the residual cruising range of the vehicle.

EP 1 707 430 A1 discloses a device for warning a user of a vehicle of attaining a minimal value for a residual cruising range, comprising
- a means capable of determining or estimating the residual cruising range of the vehicle,
- an input unit (6) is adapted for adjusting and/or setting a minimal value for the residual cruising range wherein the minimal value for the residual cruising range can be ajusted by the user of the vehicle and
- an output unit (7) is adapted for outputting a warning signal when the residual cruising range attains or falls below the minimal value.

### Summary of the invention

It is an object of the present invention to provide an improved method and an improved device for warning a user of a vehicle of attaining a minimal value for a residual cruising range.

According to the invention, the object is achieved by a device for warning a user of a vehicle according to claim 1 and a method for warning a user of a vehicle according to claim 9.

Preferred embodiments of the invention are given in the independent claims.

According to the invention, a device for warning a user of a vehicle of attaining a minimal value for a residual cruising range comprises
- a means capable of determining or estimating the residual cruising range of the vehicle,
- an input unit capable of adjusting and/or setting a minimal value for the residual cruising range and
- an output unit, capable of outputting a warning signal when the residual cruising range attains or falls below the minimal value.

The warning signal is output if the residual cruising range of the vehicle attains or falls below the set minimal value. The minimal value may be set and/or adjusted to individual requirements of the user by operating the input unit. The device for warning a user of a vehicle and the method corresponding thereto is well suited to be used in combination with electric vehicles, fuel cell vehicles, hybrid vehicles and/or vehicles powered by conventional combustion engines using fossil fuel like gas.

According to a possible embodiment of the invention, the vehicle is designed as an electric vehicle comprising an electric propulsion engine that is powered by a vehicle battery. The device for warning allows for a user an individual adjustment of the minimal value for the residual cruising range. The user of the vehicle is informed of a possible energy shortage in a timely manner. This may especially support the use of ecological friendly electric vehicles as the user may be confident to reach the closest charging facility even nowadays, when charging stations for electric vehicles are not prevalent. Furthermore, the availability of today's charging facilities may significantly vary from region to region. The device according to the invention allows for an adaptation and adjustment to the local availability of charging stations which in turn further facilitates the use of electric vehicles.

For electric vehicles, the means capable of determining or estimating the residual cruising range of the vehicle is designed as a battery management system. The battery management system monitors the state of charge and the state of health of the vehicle battery. The efficiency of vehicle batteries for electric vehicles deteriorates over time due to abrasion. The battery management system provides a reliable determination and/or estimation of the residual cruising range of the vehicle throughout the vehicle battery's life span.

The input unit may be designed as a multifunctional display comprising a touch-sensitive display and/or a keyboard that allows for a convenient adjustment and/or setting of minimal value for the residual cruising range. Furthermore, the multifunctional display may be used to provide the user with additional information relevant for safely driving the vehicle. For example, the multifunctional display may show a map of the surrounding area or display local weather conditions.

According to a preferred embodiment of the invention, the input unit is coupled to or comprises a navigation system that provides local maps and position data of the vehicle, charging stations and/or emergency facilities. The user of the vehicle is well informed about the whereabouts of such essential facilities and may, in case of an emergency, react accordingly. In particular, the user may quickly find his way to the closest charging station if he runs low on energy.

The output unit comprises suitable means to optically, acoustically and/or haptically output the warning signal. Preferably, the warning signal is output as a combination of an optical, acoustic and/or haptic signal to draw the attention of the user. This avoids that the user misses the important information of running low on energy. The user is aware of the limited residual cruising range of his vehicle, so that a break down of the vehicle may be avoided.

Preferably, the output unit is designed as an electronic instrument cluster of a vehicle's instrument panel. The instrument panel typically displays other relevant data of the vehicle and/or warning signals in the view of the user of the vehicle. Usually, the instrument panel is frequently checked for relevant information. Thus, it is unlikely that the warning indicating the limited residual cruising range and displayed on the instrument panel is overlooked.

A control unit or in a control module of the output unit is capable of storing the minimal value for the residual cruising range. The stored minimal value may be compared with the currently remaining cruising range of the vehicle; so that the warning signal may be output in the moment the residual cruising range drops below or attains the individually set minimal value.

According to the invention, a method for warning the user of the vehicle of attaining the minimal value for the residual cruising range comprises the steps of
- adjusting and/or setting a minimal value for the residual cruising range of the vehicle,
- monitoring the remaining residual cruising range of the vehicle and
- outputting a warning signal if the residual cruising range attains or falls below the minimal value.

In a further step, the stored minimal value may be compared with the current residual cruising range of the vehicle. Thus, the user is aware that the current residual cruising range drops below the minimal residual cruising range of his vehicle, so that a break down of the vehicle may be avoided.

The user of the vehicle may set the minimal value for the residual cruising range in a manner that allows the vehicle to safely reach one or more charging facilities that may comprise, for example, charging or filling stations. In particular, vehicle batteries of electric vehicles require a prolonged charging period. Thus, it may be advantageous to pre-set the minimal value accordingly, so that in case of an emergency various emergency facilities, like, for example, hospitals, emergency wards, police stations, emergency shelters and the like, are within the residual cruising range of the vehicle. The user is warned if the residual cruising range drops below the minimal value and instructs the user to re-fuel or re-charge the energy supply of his vehicle. Thus, the operation of the vehicle is ensured in case of an emergency.

Preferably, the residual cruising range is shown as a circle on a map provided by a navigation system and displayed, for example, on the multifunctional display. The user is provided with a clear illustration of the area that is still within reach of his vehicle before re-filling or re-charging of the energy supply is necessary.

The warning signal is optically output as a pictogram and, additionally or alternatively, as a warning sound. Preferably, the warning sound is output simultaneously with the optical signal to facilitate the perception of the warning signal.

The warning signal may be output for a pre-determined time interval to further reduce the likelihood of being overlooked by an inattentive user.

According to one possible embodiment of the invention, the warning signal is output at the beginning and/or the end of a ride. Typically, the user may want to use cheap off-peak power to charge the vehicle batteries. The output of the warning signal in the moment the engine is turned on and/or off instructs the user to immediately charge the vehicle batteries regardless of the availability of cheap off-peak power if necessary. Thus, the method supports the user of economically re-charging the vehicle batteries without compromising safety aspects.

According to another possible embodiment of the invention, the method further comprises the step of
- automatically adjusting the minimal value for the residual cruising range to ensure the reachability of a facility such as a charging station, a filling station, a gas station and/or an emergency facility. In particular, the automatic adjustment of the minimal value may take local position data provided by the navigation system into account. The minimal value may be automatically adjusted in a way that a pre-set number of facilities are always within the residual cruising range. The user is warned if the number of reachable facilities drops below the pre-set number. Thus, it is ensured that at least one facility, like, for example, the closest charging station, may be reached in case of an emergency.

Details of the present invention are described hereinafter. However, it should be understood that the detailed description and the specific examples indicate possible embodiments of the invention and are given by way of illustration only. Various changes and modifications of the illustrated embodiments within the spirit and scope of the invention are appreciated by those skilled in the art.

### Brief description of the drawings

The present invention will be better understood from the detailed description given in the following. The accompanying drawings are given for illustrative purposes only and do not limit the scope of the present invention.

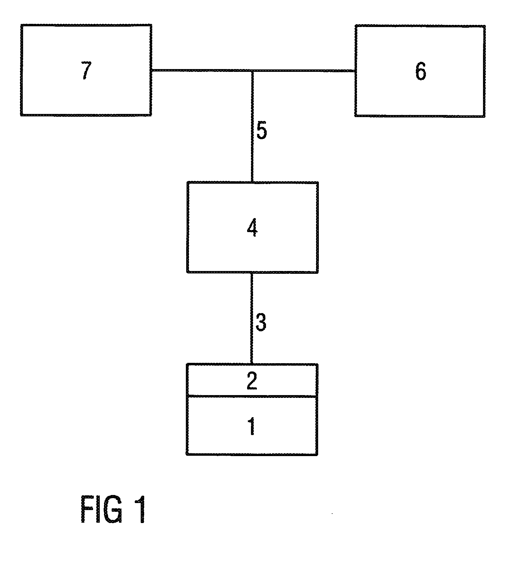

- Figure 1: shows schematically a device for warning a user of a vehicle of attaining a minimal value for a residual cruising range.

### Detailed description of the preferred embodiments

Figure 1 shows schematically a device for warning a user of a vehicle of attaining a minimal value for a residual cruising range that may be utilized to implement a method for warning the user of attaining the minimal value for the residual cruising range of the vehicle.

In the following, the method according to the invention is described based on the present embodiment of the device. The vehicle of the present embodiment described herein in detail is designed as an electric vehicle that comprises an electric propulsion engine (not shown) powered by a vehicle battery 1. However, the method for warning the user of the vehicle of attaining the minimal value for the residual cruising range is not limited to electric vehicles and may be applied to different vehicles, like, for example, fuel cell vehicles, hybrid vehicles or vehicles comprising combustion engines.

The vehicle batteries 1 are connected to a battery management system 2 that is capable of monitoring the state of charge and the state of health of the vehicle batteries 1 to estimate or determine the remaining residual cruising range of the vehicle. Accordingly, a fuel cell vehicle, a hybrid vehicle or a vehicle with a combustion engine comprises a means for estimating the amount of fuel or gas left in the tank in place of the battery management system 2.

The battery management system 2 is coupled to a control unit 4 via a first data interface 3. More specifically, the first data interface 3 may comprise a controller-area network (CAN) bus of the vehicle. The control unit 4 is connected to an input unit 6 and an output unit 7 via a second data interface 5. Additionally, the second data interface 5 connects the input unit 6 and the output unit 7 with each other.

For example, the input unit 6 is designed as a multifunctional display that comprises an optical display. The multifunctional display may be adapted to accept an input of the user. In particular, the multifunctional display may be touch-sensitive. According to one possible embodiment of the invention, the output unit 7 is designed as a so-called electronic instrument cluster that displays relevant parameters and warning signals of the vehicle on an instrument panel and in the user's immediate field of vision. The second data interface 5 may be a bus system for comfort functions of the vehicle and/or for transmitting multi-media information. The second data interface 5 may be designed, for example, as a so-called media oriented systems transport (MOST) bus.

The user of the vehicle may adjust the minimal value for the residual cruising range to individual requirements. A warning signal is generated when the remaining residual cruising range reaches or falls below the minimal value. The minimal value may be set and adjusted by entering a corresponding input via the touch-sensitive display, a keyboard or another suitable input means of the input unit 6. Preferably, such a user directed input is only accepted when the vehicle is stationary to avoid a distraction of the user of the vehicle while driving.

The set minimal value for the residual cruising range is stored in the control unit 4 or in a control module of the output unit 7 and compared with the current residual cruising range, so that the warning signal may be generated when the current residual cruising range reaches the minimal value. The current residual cruising range is determined by taking the current state of charge and the current state of health of the vehicle batteries 1 into account. The current state of health and the current state of charge is transmitted to the control unit 4 and further to output unit 7 by the battery management system 2.

The output unit 7 comprises suitable means to optically, acoustically and/or haptically output the warning signal. A suitable continuous illuminated or blinking pictogram may be displayed on the output unit 7 to warn the user of the limited residual cruising range. Preferably, the pictogram comprises suitable signal colours, like, for example, red or orange, commonly used to display other relevant warning signals to draw the attention of the user. A warning sound may be simultaneously generated with the optical warning signal. Additionally, a descriptive message may be displayed on, for example, the multifunctional display to inform the user of the vehicle about the residual cruising range that the vehicle is still able to cover. Furthermore, the residual cruising range may be, for example, indicated by a circle shown on a map that is generated by a navigation system and preferably displayed on the multifunctional display. This allows the user of the vehicle to immediately ascertain the current location of the vehicle and the location of the places that are within the residual cruising range and thus may be reached by the vehicle when taking the current state of health and the current state of charge of the batteries 1 into account.

The output unit 7 may display an optical warning signal, if the residual cruising range already reached or fell below the minimal value in the moment the ignition is turned. The warning signal is output when the engine of the vehicle is started at the beginning of a ride and/or the warning signal is output for the pre-determined time interval, like, for example, five seconds when the engine of the vehicle is turned off at the end of a ride. The optical warning signal may be displayed as a flashing light and a warning sound may be simultaneously generated. Additionally, the multifunctional display may show the descriptive message and, for example, the surrounding area that is within the residual cruising range of the vehicle. Alternatively, the surrounding area is displayed on an additional monitor of the navigation system. After the pre-determined time interval has passed, the output of the warning signal may be deactivated by the user. Alternatively or additionally, the optical warning signal may automatically cease to blink after the pre-determined time interval has passed.

The user of the vehicle may set the minimal value for the residual cruising range of the vehicle that allows the vehicle to reach one or several close charging stations in the vicinity of the vehicle. Depending on the area surrounding the vehicle, the availability of charging stations that permit a quick charging of the vehicle batteries 1 may vary. As the cruising range of today's electric vehicles is rather limited by the vehicle battery's 1 state of charge, it is advantageous that the user of the vehicle individually sets or adjusts the minimal value for the residual cruising range, so that the warning signal is output in a timely manner.

Furthermore, it is reasonable to set the minimal value for the residual cruising range in a manner that permits the vehicle to reach not only the closest charging station but a plurality of charging stations as even a quick charging of today's vehicle batteries 1 requires a relative long charging period. Additionally, the charging facilities of any one given charging station may be completely occupied. If the average distance between two charging stations in a given area is, for example, ten kilometres, the user may want to set the minimal value for the residual cruising range to 35 km. This allows the user to consecutively approach on average three charging stations in order to find an unoccupied charging facility, whereby on average a safety buffer of five kilometres in maintained. Thus, it is ensured that the energy provided by the vehicle batteries 1 is sufficient to reach even the furthest charging station even if the estimation of the current state of charge and/or state of health of the vehicle batteries 1 is inaccurate or the distance between the different charging stations was underestimated.

It is reasonable to adjust the minimal value for the cruising range in a manner that allows the user of the vehicle to reach certain emergency facilities. Emergency facilities may, in particular, comprise hospitals, police stations or emergency shelters. The output of the warning signal indicates that the residual operating range reached or fell below the minimal value and informs the user in time that a re-charging of the batteries 1 is necessary to maintain the reachability of the emergency facilities in case of an emergency.

This is particularly beneficial for users that charge the vehicle batteries 1 in their own garage. Typically, the user may want to take advantage of cheap off-peak power to charge the vehicle batteries 1 that may be available in particular during the night. To do so, the user connects the vehicle to the local power grid. The charging of the vehicle batteries 1 may be controlled by a clock timer that is set to a time of day when off-peak power is available. Alternatively, the user may start with the charging of the vehicle batteries 1 immediately by directly connecting the vehicle to the power grid.

If the user parks his vehicle with a low residual state of charge at a time of day when cheap off-peak power is not available, the vehicle batteries 1 are not immediately charged. If now an occurring emergency requires the user of the vehicle to reach a certain emergency facility, like, for example, the emergency ward of a hospital, the vehicle batteries 1 are depleted before arrival at the emergency facility.

This may be avoided by setting the minimal value for the residual cruising range accordingly, so that the distance to the emergency facility is smaller than the pre-set minimal value. If the user parks his vehicle in the garage and the residual cruising range already attained or went below the pre-set minimal value, the generated warning instructs the user to immediately charge the vehicle independently of the current conditions of the available power supply.

According to an alternative embodiment of the invention, the input unit 6 may be designed as or coupled to the navigation system. The navigation system provides the input unit 6 with maps of the surrounding area and position data of the vehicle, charging stations and/or emergency facilities, so that a current distance of the vehicle from a charging station or an emergency facility may be determined. In particular, the coupling of the navigation system to the input unit 6 allows for an automatic adjustment of minimal value for the residual cruising range without an interaction by the user. In this alternative embodiment, the reachability of certain important facilities is automatically ensured and optimally adapted to the local availability of these facilities.

Additionally to electric vehicles, the device and the method described herein is well suited for fuel cell vehicles, hybrid vehicles, or vehicles comprising combustion engines. The residual cruising range in the these cases is typically determined by a means known in the state of the art that measures or estimates the amount gas or fuel left in a tank of the vehicle. However, those means known in the state of art do not allow for an individual adjustment of the minimal value for the residual cruising range. The minimal value is pre-determined by the manufacturer of the vehicle. As the availability and density of gas stations, and in particular gas stations comprising filling facilities for hydrogen to refill fuel cell vehicles, may significantly differ in various regions, an individual adjustment of the minimal value for the residual cruising range is generally beneficial for the various different types of vehicles mentioned herein above.

### List of references

- 1: battery
- 2: battery management system
- 3: first data interface
- 4: control unit
- 5: second data interface
- 6: input unit
- 7: output unit

## Claims

1. A device for warning a user of a vehicle of attaining a minimal value for a residual cruising range, comprising
- a means capable of determining or estimating the residual cruising range of the vehicle,
- an input unit (6) is adapted for adjusting and/or setting a minimal value for the residual cruising range wherein the minimal value for the residual cruising range can be ajusted by the user of the vehicle only when the vehicle is stationary and
- an output unit (7) is adapted for outputting a warning signal when the residual cruising range attains or falls below the minimal value and when the engine of the vehicle is started at the beginning of a ride and when the engine is turned off at the end of a ride, wherein when the engine is turned off at the end of a ride, the warning signal is output for a pre-determined time interval.

2. A device according to claim 1,
**characterized in that** a vehicle battery (1) provides an energy supply for an electric propulsion engine of the vehicle.

3. A device according to claim 2,
**characterized in that** the means is designed as a battery management system (2) capable of monitoring the state of charge and the state of health of the vehicle battery (1).

4. A device according to one of the previous claims,
**characterized in that** the input unit (6) is designed as a multifunctional display comprising a touch-sensitive display and/or a keyboard.

5. A device according to one of the previous claims,
**characterized in that characterized in that** the input unit (6) is coupled to or comprises a navigation system that provides maps and position data of the vehicle, charging stations and/or emergency facilities.

6. A device according to one of the previous claims,
**characterized in that** the output unit (7) comprises suitable means to optically, acoustically and/or haptically output the warning signal.

7. A device according to one of the previous claims,
**characterized in that** the output unit (7) is designed as an electronic instrument cluster of a vehicle's instrument panel.

8. A device according to one of the previous claims,
**characterized in that** a control unit (4) or in a control module of the output unit (7) is capable of storing the minimal value for the residual cruising range.

9. A method for warning a user of a vehicle of attaining a minimal value for a residual cruising range, comprising the steps of
- adjusting and/or setting a minimal value for the residual cruising range of the vehicle wherein the minimal value for the residual cruising range can be ajusted by the user of the vehicle, only when the vehicle is stationary,
- monitoring the remaining residual cruising range of the vehicle and
- outputting a warning signal when the residual cruising range attains or falls below the minimal value and when the engine of the vehicle is started at the beginning of a ride and when the engine is turned off at the end of a ride, wherein when the engine is turned off at the end of a ride, the warning signal is output for a pre-determined time interval.

10. A method according to claim 9,
**characterized in** the step of
- comparing the stored minimal value with the current residual cruising range of the vehicle.

11. A method according to claim 9 or 10,
**characterized in that** the residual cruising range is shown as a circle on a map provided by a navigation system.

12. A method according to one of the claims 9 to 11,
**characterized in that** the warning signal is optically output as a pictogram and/or as a warning sound.

13. A method according to one of the claims 9 to 12,
**characterized in that** the warning signal is output for a pre-determined time interval.

14. A method according to one of the claims 9 to 13, **characterized in that** the warning signal is output at the beginning and/or the end of a ride.

15. A method according to claim to one of the claims 9 to 14,
**characterized in** the step of
- automatically adjusting the minimal value for the residual cruising range to ensure the reachability of a facility such as a charging station, a filling station, a gas station and/or an emergency facility.

## Patentansprüche

1. Ein Gerät zur Warnung eines Benutzers eines Fahrzeugs beim Erreichen eines Mindestwerts für eine Restreichweite umfassend
- ein zum Bestimmen oder Schätzen der Restreichweite des Fahrzeugs geeignetes Mittel,
- eine zum Justieren und/oder Einstellen eines Mindestwerts für die Restreichweite geeignete Eingabeeinheit (6), wobei der Mindestwert für die Restreichweite vom Benutzer des Fahrzeugs nur dann eingestellt werden kann, wenn das Fahrzeug steht und
- eine Ausgabeeinheit (7) geeignet zum Ausgeben eines Warnsignals, wenn die Restreichweite den Mindestwert erreicht oder unterschreitet und wenn der Motor des Fahrzeugs zu Beginn einer Fahrt gestartet wird und wenn der Motor am Ende einer Fahrt ausgeschaltet wird, wobei dann, wenn der Motor am Ende einer Fahrt ausgeschaltet wird, das Warnsignal für ein vorbestimmtes Zeitintervall ausgegeben wird.

2. Ein Gerät nach Anspruch 1,
**dadurch gekennzeichnet, dass** eine Fahrzeugbatterie (1) die Energieversorgung für einen elektrischen Antriebsmotor des Fahrzeugs bereitstellt.

3. Ein Gerät nach Anspruch 2,
**dadurch gekennzeichnet, dass** das Mittel als ein Batteriemanagementsystem (2) geeignet zur Überwachung des Ladezustands und des Gesundheitszustands der Fahrzeugbatterie (1) ausgelegt ist.

4. Ein Gerät nach einem der vorherigen Ansprüche,
**dadurch gekennzeichnet, dass** die Eingabeeinheit (6) als ein multifunktionales Display umfassend ein berührungsempfindliches Display und/oder eine Tastatur ausgelegt ist.

5. Ein Gerät nach einem der vorherigen Ansprüche,
**dadurch gekennzeichnet, dass** die Eingabeeinheit (6) an ein Navigationssystem gekoppelt ist oder dieses umfasst, das Karten und Positionsdaten vom Fahrzeug, von Ladestationen und/oder Notfalleinrichtungen bereitstellt.

6. Ein Gerät nach einem der vorherigen Ansprüche,
**dadurch gekennzeichnet, dass** die Ausgabeeinheit (7) geeignete Mittel zur optischen, akustischen und/oder haptischen Ausgabe des Warnsignals umfasst.

7. Ein Gerät nach einem der vorherigen Ansprüche,
**dadurch gekennzeichnet, dass** die Ausgabeeinheit (7) als eine elektronische Instrumentenkombination der Instrumententafel eines Fahrzeugs ausgelegt ist.

8. Ein Gerät nach einem der vorherigen Ansprüche,
**dadurch gekennzeichnet, dass** eine Steuereinheit (4) oder in einem Steuermodul der Ausgabeeinheit (7) in der Lage ist, den Mindestwert für die Restreichweite zu speichern.

9. Ein Verfahren zur Warnung eines Benutzers eines Fahrzeugs beim Erreichen eines Mindestwerts für eine Restreichweite umfassend die Schritte des
- Justierens und/oder Einstellens eines Mindestwerts für die Restreichweite des Fahrzeugs, wobei der Mindestwert für die Restreichweite vom Benutzer des Fahrzeugs nur dann eingestellt werden kann, wenn das Fahrzeug steht,
- Überwachens der verbleibenden Restreichweite des Fahrzeugs und
- Ausgebens eines Warnsignals, wenn die Restreichweite den Mindestwert erreicht oder unterschreitet und wenn der Motor des Fahrzeugs zu Beginn einer Fahrt gestartet wird und wenn der Motor bei Ende einer Fahrt ausgeschaltet wird, wobei dann, wenn der Motor bei Ende einer Fahrt ausgeschaltet wird, das Warnsignal für ein vorbestimmtes Zeitintervall ausgegeben wird.

10. Ein Verfahren nach Anspruch 9,
**gekennzeichnet durch** den Schritt des
- Vergleichens des gespeicherten Mindestwerts mit der aktuellen Restreichweite des Fahrzeugs.

11. Ein Verfahren nach Anspruch 9 oder 10,
**dadurch gekennzeichnet, dass** die Restreichweite als ein Kreis auf einer vom Navigationssystem bereitgestellten Karte angezeigt wird.

12. Ein Verfahren nach einem der Ansprüche 9 bis 11,
**dadurch gekennzeichnet, dass** das Warnsignal optisch als ein Piktogrammen und/oder als ein Warnton ausgegeben wird.

13. Ein Verfahren nach einem der Ansprüche 9 bis 12,
**dadurch gekennzeichnet, dass** das Warnsignal für ein vorbestimmtes Zeitintervall ausgegeben wird.

14. Ein Verfahren nach einem der Ansprüche 9 bis 13,
**dadurch gekennzeichnet, dass** das Warnsignal zu Beginn und/oder zum Ende einer Fahrt ausgegeben wird.

15. Ein Verfahren nach einem der Ansprüche 9 bis 14,
**gekennzeichnet durch** den Schritt der
- automatischen Einstellung des Mindestwerts für die Restreichweite zum Sicherstellen der Erreichbarkeit einer Einrichtung wie einer Ladestation, einer Tankstelle, einer Gasstation und/oder einer Notfalleinrichtung.

## Revendications

1. Dispositif destiné à avertir un utilisateur d'un véhicule qu'une valeur minimale a été atteinte pour une plage d'autonomie résiduelle, comprenant
- un moyen prévu pour déterminer ou estimer la plage d'autonomie résiduelle du véhicule,
- une unité d'entrée (6) prévue pour régler et/ou fixer une valeur minimale pour la plage d'autonomie résiduelle, ladite valeur minimale pour la plage d'autonomie résiduelle pouvant être réglée par l'utilisateur du véhicule exclusivement quand le véhicule est stationnaire, et
- une unité de sortie (7), prévue pour émettre un signal d'avertissement quand la plage d'autonomie résiduelle atteint la valeur minimale, ou chute sous celle-ci, quand le moteur du véhicule est démarré au départ d'un déplacement et quand le moteur est mis à l'arrêt à la fin d'un déplacement, le signal d'avertissement étant émis pendant un intervalle temporel prédéfini quand le moteur est mis à l'arrêt à la fin d'un déplacement.

2. Dispositif selon la revendication 1,
**caractérisé en ce qu'**une batterie (1) du véhicule alimente en courant un moteur de propulsion électrique du véhicule.

3. Dispositif selon la revendication 2,
**caractérisé en ce que** le moyen est conçu comme un système de gestion de batterie (2) prévu pour contrôler l'état de charge et l'état de santé de la batterie (1) du véhicule.

4. Dispositif selon l'une des revendications précédentes,
**caractérisé en ce que** l'unité d'entrée (6) est conçue comme un écran multifonctionnel incluant un écran tactile et/ou un clavier.

5. Dispositif selon l'une des revendications précédentes,
**caractérisé en ce que** l'unité d'entrée (6) est couplée à un système de navigation, ou comprend un système de navigation délivrant des cartes et des données de position du véhicule, des stations de charge et/ou des postes de secours.

6. Dispositif selon l'une des revendications précédentes,
**caractérisé en ce que** l'unité de sortie (7) comprend des moyens appropriés pour une émission optique, acoustique et/ou tactile du signal d'avertissement.

7. Dispositif selon l'une des revendications précédentes,
**caractérisé en ce que** l'unité de sortie (7) est conçue comme un groupe d'instruments électroniques d'un tableau de bord du véhicule.

8. Dispositif selon l'une des revendications précédentes,
**caractérisé en ce qu'**une unité de commande (4) ou un module de commande de l'unité de sortie (7) sont prévus pour mémoriser la valeur minimale pour la plage d'autonomie résiduelle.

9. Procédé d'avertissement d'un utilisateur d'un véhicule qu'une valeur minimale a été atteinte pour une plage d'autonomie résiduelle, comprenant les étapes de
- réglage et/ou fixation d'une valeur minimale pour la plage d'autonomie résiduelle du véhicule, ladite valeur minimale pour la plage d'autonomie résiduelle pouvant être réglée par l'utilisateur du véhicule exclusivement quand le véhicule est stationnaire, et
- contrôle de la plage d'autonomie résiduelle du véhicule, et
- émission d'un signal d'avertissement quand la plage d'autonomie résiduelle atteint la valeur minimale, ou chute sous celle-ci, quand le moteur du véhicule est démarré au départ d'un déplacement et quand le moteur est mis à l'arrêt à la fin d'un déplacement, le signal d'avertissement étant émis pendant un intervalle temporel prédéfini quand le moteur est mis à l'arrêt à la fin d'un déplacement.

10. Procédé selon la revendication 9,
**caractérisé par** l'étape de
- comparaison de la valeur minimale mémorisée avec la plage d'autonomie résiduelle actuelle du véhicule.

11. Procédé selon la revendication 9 ou la revendication 10,
**caractérisé en ce que** la plage d'autonomie résiduelle est représentée par un cercle sur une carte délivrée par un système de navigation.

12. Procédé selon l'une des revendications 9 à 11,
**caractérisé en ce que** le signal d'avertissement est émis optiquement sous forme de pictogramme, et/ou de son d'avertissement.

13. Procédé selon l'une des revendications 9 à 12,
**caractérisé en ce que** le signal d'avertissement est émis pendant un intervalle temporel prédéfini.

14. Procédé selon l'une des revendications 9 à 13,
**caractérisé en ce que** le signal d'avertissement est émis au départ et/ou à la fin d'un déplacement.

15. Procédé selon l'une des revendications 9 à 14,
**caractérisé par** l'étape de
- réglage automatique de la valeur minimale pour la plage d'autonomie résiduelle afin de garantir l'accessibilité d'une installation telle qu'une station de charge, une station-service, un poste d'essence et/ou un poste de secours.
